(19) Europäisches Patentamt
European Patent Office
Office européen des brevets

(11) Veröffentlichungsnummer: **0 381 205 A2**

# (12) EUROPÄISCHE PATENTANMELDUNG

(21) Anmeldenummer: **90101951.3**

(51) Int. Cl.⁵: **C08F 4/72**

(22) Anmeldetag: **01.02.90**

(30) Priorität: **02.02.89 DE 3903145**

(43) Veröffentlichungstag der Anmeldung:
**08.08.90 Patentblatt 90/32**

(84) Benannte Vertragsstaaten:
**BE CH DE FR GB LI NL**

(71) Anmelder: **WACKER-CHEMIE GMBH**
**Prinzregentenstrasse 22**
**D-8000 München 22(DE)**

(72) Erfinder: **Fleischmann, Gerald, Dr. Dipl.-Chem.**
**Carl-Bosch-Strasse 3**
**D-8263 Burghausen(DE)**
Erfinder: **Eck, Herbert, Dr. Dipl.-Chem.**
**Burg 11**
**D-8263 Burghausen(DE)**

## (54) Verfahren zur Polymerisation polarer Verbindungen.

(57) Gegenstand der Erfindung ist ein Verfahren zur Polymerisation von polaren Verbindungen, die in α-Stellung zu einer Carbonyl-, Nitril-, Sulfon-, Phosphon- oder Nitrogruppe eine C=C-Doppelbindung aufweisen, worunter insbesondere Acrylsäurederivate, α-Nitroolefine, Vinylsulfonderivate und Vinylphosphonsäureester zu verstehen sind. Die Polymerisation ist quasi-ionisch, wird durch Organometallverbindungen des Siliciums, Germaniums und Zinns als Initiatoren zusammen mit nukleophilen oder elektrophilen Katalysatoren ausgelöst und bei Temperaturen im Bereich von -100 °C bis +100 °C durchgeführt. Als Initiatoren werden ausgewählte Silane, Germane, Stannane, Siloxane, Germoxane oder Stannoxane verwendet, in welchen je Metallatom mindestens eine metallgebundene Allyl- und Propargylgruppe, die mit Kohlenwasserstoffgruppen substituiert sein können, vorhanden ist.

EP 0 381 205 A2

# Verfahren zur Polymerisation polarer Verbindungen

Gegenstand der Erfindung ist ein Verfahren zur Polymerisation von polaren Verbindungen, die in α-Stellung zu einer Carbonyl-, Nitril-, Nitro-, Sulfon- oder Phosphongruppe eine C=C-Doppelbindung aufweisen, worunter insbesondere Acrylsäurederivate, wie Ester, Nitrile und Amide von Acrylsäure und Methacrylsäure, α-Nitroolefine, Vinylsulfon-und Vinylphosphonsäurederivate zu verstehen sind.

In großtechnischem Maßstab werden polymere Acrylsäurederivate meist durch radikalische Polymerisation hergestellt, die durch freie Radikale bildende Initiatoren ausgelöst und durch Kettenabbruch zum Stillstand kommt, bei dem zwei der gebildeten Radikale miteinander reagieren. Dabei können Polymere mit hohem Molekulargewicht aber sehr breiter Molekulargewichtsverteilung erhalten werden.

Bekannt ist ferner die anionische Polymerisation von Acrylsäurederivaten, die nicht durch Radikale sondern durch Anionen bildende initiatoren, wie alkaliorganische Verbindungen, ausgelöst wird und die zu sogenannten lebenden Polymeren mit aktiven endständigen Gruppen führt, weil ein Kettenabbruch durch Reaktion von zwei gleichsinnig geladenen Ionen nicht möglich ist. Der Kettenabbruch kann künstlich herbeigeführt werden, beispielsweise durch Wasser- oder Alkoholzugabe. Nachteilig bei diesem Verfahren ist, daß die gewünschte enge Molekulargewichtsverteilung nur bei tiefen Temperaturen (bis zu -80 °C) und mit sehr reinen Ausgangsprodukten erreicht werden kann (vgl. US-A 4 351 924).

Auf ähnlicher Basis beruht die Polymerisation von Acrylsäurederivaten, die unter der Bezeichnung "quasi-ionisch" bekannt geworden ist. Hierbei wird die Startreaktion durch bestimmte ausgewählte Initiatoren zusammen mit nukleophilen oder elektrophilen Katalysatoren ausgelöst, wobei gleichfalls lebende Polymere gebildet werden. Als ausgewählte Initiatoren sind Silicium-, Germanium- und Zinnverbindungen bekannt, in welchen die genannte Elemente an Sauerstoff- oder Kohlenstoffatome gebunden sind, wie Trimethylsilylketenacetale oder Trimethylsilylcyanid (vgl. US-A 4 414 372, US-A 4 417 034, US-A 4 508 880, US-A 4 524 196, US-A 4 588 795 und US-A 4 732 955). Dieses Verfahren kann bei Raumtemperatur und höher durchgeführt werden, erfordert jedoch ebenfalls Ausgangsmaterialien von hoher Reinheit und führt außerdem nur bei Methacrylsäurederivaten zu Polymeren mit der gewünschten engen Molekulargewichtsverteilung.

Mit Initiatoren vom Typ der Mercaptosilane sollen hingegen unter den genannten Bedingungen der quasi-ionischen Polymerisation lebende Polymere mit enger Molekulargewichtsverteilung auch bei Verwendung von Acrylsäurederivaten als Monomere erhalten werden (vgl. DE-A 3 504 168, die der US-A 4 626 579 entspricht).

Nach dem Stand der Technik können mit Hilfe der quasi-ionischen Polymerisation unter Verwendung bestimmter Organosiliciumverbindungen als Initiatoren in Verbindung mit nukleophilen oder elektrophilen Katalysatoren aus monomeren Acrylsäurederivaten beliebiger Art Polymere mit enger Molekulargewichtsverteilung erhalten werden, deren durchschnittliche Molekulargewichte selbst jedoch im allgemeinen relativ niedrig sind.

Aufgabe der Erfindung ist es, ein Verfahren zur Polymerisation von polaren Verbindungen, die in α-Stellung zu einer Carbonyl-, Nitril-, Nitro-, Sulfon- oder Phosphongruppe eine C=C-Doppelbindung aufweisen, zur Verfügung zu stellen, bei dem die Polymerisation mit Organometallverbindungen als Initiatoren zusammen mit nukleophilen oder elektrophilen Katalysatoren, gegebenenfalls in Gegenwart eines aprotischen Lösungmsittels ausgelöst wird, das im gesamten Temperaturbereich von -100 °C bis +100 °C nicht nur für Acrylsäurederivate beliebiger Art, sondern universell anwendbar ist und das auch Polymere liefern kann, die sowohl ein hohes durchschnittliches Molekulargewicht als auch eine enge Molekulargewichtsverteilung haben.

Diese Aufgabe wird bei dem Verfahren zur Polymerisation der genannten Art erfindungsgemäß dadurch gelöst, daß als Initiatoren Organometallverbindungen verwendet werden, ausgewählt aus einer Gruppe von Silanen, Germanen, Stannanen, Siloxanen, Germoxanen und Stannoxanen, die je Molekül mindestens eine Si-, Ge- oder Sn- gebundene 2-Alkenyl- und/oder 2-Alkinylgruppe enthalten. Diese Gruppen können mit organischen Resten substituiert sein, die kein protisches H-Atom aufweisen.

Von den als Initiatoren verwendeten Organometallverbindungen sind als Silane, Germane und Stannane solche der allgemeinen Formel

$R_{4-n}MeX_n$ (1)

bevorzugt, worin Me = Si, Ge oder Sn;

R = Alkyl, Cycloalkyl-, Aryl-, Aralkyl- oder Alkenylreste mit der Maßgabe, daß 1-Arylalkyl- und 2-Alkenylreste ausgeschlossen sind;

X = Reste der Formeln

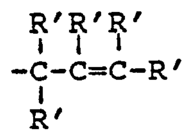 , und 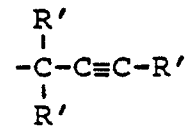

(a) (b)

$R'$ = H-Atome oder Reste R und
n = 1, 2, 3 oder 4.

Als Siloxane, Germoxane und Stannoxane sind ketten- oder ringförmige Verbindungen bevorzugt, die mindestens eine Einheit der allgemeinen Formel

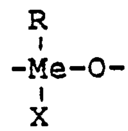 (2)

enthalten, worin Me, R und X die angegebene Bedeutung haben und die restlichen Valenzen der Metallatome mit Resten R abgesättigt oder mit O-Atomen weiterer Einheiten (2) oder Einheiten der allgemeinen Formel

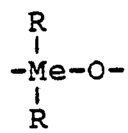 (2′)

verbunden sind.

Beispiele für Reste R in diesen erfindungsgemäß verwendeten Organometallverbindungen, die gleich oder verschieden sein können, sind Alkylreste mit 1 bis 18 C-Atomen, vorzugsweise 1 bis 4C-Atomen, die geradkettig oder verzweigt sein können, wie Methyl-, Ethyl-, n-Propyl-, iso-Propyl- und n-Butylreste; Cycloalkylreste, wie Cyclopentyl- und Cyclohexylreste; Alkenylreste mit 2 bis 18 C-Atomen, deren C=C-Doppelbindung nicht in 2-Stellung vom Metallatom aus gerechnet stehen darf, vorzugsweise 2 bis 4 C-Atomen, wie Vinyl-, 1-Propenyl- und 3-Butenylreste; Arylreste, wie Phenyl-, Tolyl-, Xylyl- und Naphthylreste, sowie Aralkylreste, deren Arylgruppe nicht an dem C-Atom in 1-Stellung vom Metallatom aus gerechnet stehen darf, wie 2-Phenethyl- und 3-Phenylpropylreste. Aufgrund der leichten Zugänglichkeit sind Ethyl-, Vinyl-, Phenyl- und insbesondere Methylreste besonders bevorzugt.

Als Reste X sind insbesondere Allylreste gemäß der Formel 1a und Propargylreste gemäß der Formel 1b bevorzugt, die auch mit Resten R substituiert sein, oder mit diesen gemeinsam oder unter Einschluß des Metallatoms einen Ring bilden können. Beispiele hierfür sind außer Allyl- und Propargylresten, in welchen die Reste $R'$ jeweils Wasserstoffatome sind, Methallyl-, But-3-en-2-yl-, 3-Methyl-2-butenyl-(Prenyl-), 2-Butinyl-, 2-Cyclohexenyl-, 2-Cyclopentenyl-, sowie 1-Sila-3-cyclopentenylreste.

Die erfindungsgemäß als Initiatoren verwendeten Organometallverbindungen sind entweder handelsübliche Produkte oder sie können in an sich bekannter Weise hergestellt werden.

Für die Durchführung des Polymerisationsverfahrens werden die erfindungsgemäß verwendeten Organometallverbindungen zusammen mit nukleophilen oder elektrophilen Katalysatoren eingesetzt. Derartige Katalysatoren sind bekannt und beispielsweise in der US-A 4 417 034 beschrieben. Tetrabutylammoniumfluorid und Tetrabutylammoniumcyanid haben sich dabei besonders bewährt.

Das Molverhältnis von Initiator : Katalysator liegt üblicherweise im Bereich von 1000 bis 0,1 : 1, vorzugsweise im Bereich von 100 bis 1 : 1 und insbesondere im Bereich von 50 bis 10 : 1.

Das Polymerisationsverfahren selbst kann in Abhängigkeit von dem ausgewählten Initiator bei Temperaturen im Bereich von -100 °C bis +100 °C, vorzugsweise im Bereich von -20 °C bis +60 °C und insbesondere im Bereich von +10 °C bis +50 °C, durchgeführt werden. Entscheidend ist hierbei, daß unter Ausschluß von Feuchtigkeit gearbeitet wird, was üblicherweise mit Hilfe einer Inertgasatmosphäre, wie Argon oder Stickstoff, oder mit trockener Luft erreicht werden kann. Die Polymerisation kann ohne oder in

Gegenwart eines aprotischen Lösungsmittels als Lösungs-, Fällungs-, Suspensions- oder Emulsionspolymerisation diskontinuierlich oder kontinuierlich durchgeführt werden. Als Lösungsmittel werden dabei vorteilhaft solche ausgewählt, in welchen sowohl die eingesetzten Monomeren als auch Initiator und Katalysator bei der vorgesehenen Reaktionstemperatur ausreichend löslich sind. Beispiele für derartige aprotische Lösungsmittel sind Methylacetat, Ethylacetat, Butylacetat, Acetonitril, Toluol, Xylol, N,N-Dimethylformamid, N-Methylpyrrolidon, Tetrahydrofuran, tert.-Butylmethylether und Siliconöle, worunter insbesondere Polydimethylsiloxanöle und Polymethylphenylsiloxanöle mit Viskositäten im Bereich von etwa 5 - 500 mPa.s/25 °C zu verstehen sind.

Als zu polymerisierende Monomere können, wie bereits erwähnt, insbesondere Acrylsäurederivate beliebiger Art eingesetzt werden, wie Ester, Amide und Nitrile von Acrylsäure und Methacrylsäure. Beispiele hierfür sind insbesondere Acrylsäureester, wie Acrylsäure-n-butylester, Acrylsäureethylester und Acrylsäure-2-ethyl-hexylester; Methacrylsäureester, wie Methacrylsäure-methylester, Methacrylsäure-ethylester, Methacrylsäure-n-butylester, Methacrylsäure-cyclohexylester, Methacrylsäure-dodecylester und Methacrylsäure-tetradecylester. Weiterhin $\alpha$-Nitroolefine, wie Nitroethen, 2-Nitro-propen-1, 1-Nitro-cyclohexen-1; Vinyl-sulfonderivate, wie Vinyl-methylsulfon, Vinyl-phenylsulfon, Vinylsulfonsäure-ethylester; sowie Vinylphosphonsäureester, wie Vinylphosphonsäurediethylester.

Die Durchführung des Polymerisationsverfahrens kann in an sich bekannter Weise diskontinuierlich oder kontinuierlich vorgenommen werden.

Vorteilhaft werden Initiator und Katalysator vorgelegt und die Monomeren mit oder ohne Lösungsmittel zudosiert, wobei mechanische Bewegung die gute Verteilung der Monomeren unterstützt und durch Kühlung dafür gesorgt werden kann, daß die vorgesehene Temperatur der exotherm verlaufenden Reaktion nicht überschritten wird.

Nachdem die zugegebenen Monomeren verbraucht worden sind, kommt die Polymerisation zum Stillstand. Im Reaktionsgefäß liegen jedoch lebende Polymere vor, die auch nach Verbrauch der Monomeren noch aktiv sind. Diese können in bekannter Weise durch Zugabe von anderen Monomeren zu Blockmischpolymeren weiterpolymerisiert oder durch Zugabe von Kettenabbruchreagenzien oder von sogenannten Kopplungsmitteln in inaktive Polymere umgewandelt werden, wie beispielsweise in der US-A 4 417 034 ausführlich beschrieben.

Mit Hilfe der erfindungsgemäß verwendeten Initiatoren können nicht nur Acrylsäurederivate beliebiger Art in einem breiten Temperaturbereich quasi-ionisch polymerisiert werden, sondern die erhaltenen Polymeren zeichnen sich auch durch eine enge Molekulargewichtsverteilung aus.

Die Erfindung wird in den folgenden Beispielen näher erläutert. In den Beispielen wurden die Polymerisationsreaktionen jeweils unter Argon als Inertgasatmosphäre bzw. trockener Luft durchgeführt, wenn nichts anderes angegeben ist. Die verwendeten Lösungsmittel wurden nach bekannten Verfahren getrocknet und die Monomeren durch Filtration über Aluminiumoxid gereinigt.

Die Herstellung der wasserfreien Lösung von Tetrabutylammoniumfluorid in Tetrahydrofuran, bzw. Toluol, erfolgte in bekannter Weise mittels Calciumhydrid. Die polymeren Endprodukte wurden NMR-spektroskopisch ($^1$H-NMR) sowie gelchromatographisch (GPC) charakterisiert. Die Silane wurden, wie im Handel erhältlich, ohne weitere Reinigung eingesetzt. Das mittlere Molekulargewicht $M_n$ wurde jeweils durch GPC und NMR (Endgruppenbestimmung) ermittelt.

Beispiel 1

In eine Lösung aus 650 mg (5 mmol) Allyltrimethylsilan und 0.15 mmol (0.6 ml einer 0.25 M Lösung in Tetrahydrofuran) Tetrabutylammoniumfluorid in 100 ml wasserfreiem tert.-Butyl-methylether wurden unter Rühren 64 g (500 mmol) Acrylsäure-n-butylester innerhalb von 30 min eingetragen, wobei die Reaktionstemperatur auf 40 °C stieg. Nach Beendigung der exothermen Reaktion wurde noch weitere 6h bei Raumtemperatur gerührt. Anschließend wurde das Lösungsmittel im Vakuum entfernt und das Produkt bei 60 °C im Hochvakuum getrocknet.

Ausbeute: 55 g (86 % der Theorie)

GPC: $\overline{M}_n$ 12500; $\overline{M}_n$ (NMR): 11000

Beispiel 2

Das Verfahren gemäß Beispiel 1 wurde wiederholt mit der Abänderung, daß anstelle von Allyltrimethylsilan 750 mg (6,7 mmol) Propargyl-trimethylsilan als Initiator und 90 g (703 mmol) Acrylsäure-n-butylester als Monomer eingesetzt wurden.
Ausbeute: 71 g (79 % der Theorie)
GPC: $\overline{M}_n$ 10 000;

Beispiel 3

In eine Lösung aus 2,6 g (20 mmol) Allyl-trimethylsilan und 1 mmol (4 ml einer 0,25 M Lösung in Tetrahydrofuran) Tetrabutylammoniumfluorid in 100 ml wasserfreiem Tetrahydrofuran wurden unter Rühren und Kühlen, so daß die Reaktionstemperatur 40 °C nicht überstieg, 100 g (1 mol) Methacrylsäuremethylester eingetragen. Nach Beendigung der exothermen Reaktion wurde noch weitere 4h bei Raumtemperatur gerührt. Anschließend wurde das Lösungsmittel im Vakuum entfernt und das Produkt bei 60 °C im Hochvakuum getrocknet.
Ausbeute: 100 g (100 % der Theorie)
GPC: $\overline{M}_n$ 10 000; $\overline{M}_n$(NMR): 10 000;

**Ansprüche**

1. Verfahren zur Polymerisation von polaren Verbindungen, die in α-Stellung zu einer Carbonyl-, Nitril-, Nitro-, Sulfon- oder Phosphongruppe eine C=C-Doppelbindung aufweisen, bei dem die Polymerisation mit Organometallverbindungen von Silicium, Germanium und Zinn als Initiatoren zusammen mit nukleophilen oder elektrophilen Katalysatoren ausgelöst und bei Temperaturen im Bereich von -100 °C bis +100 °C, gegebenenfalls in Gegenwart eines aprotischen Lösungsmittels, durchgeführt wird, dadurch gekennzeichnet, daß als Initiatoren Organometallverbindungen verwendet werden, ausgewählt aus einer Gruppe von Silanen, Germanen, Stannanen, Siloxanen, Germoxanen und Stannoxanen, die je Molekül mindestens eine Si-, Ge- oder Sn-gebundene 2-Alkenyl-und/oder 2-Alkinylgruppe enthalten.

2. Verfahren nach Anspruch 1, dadurch gekennzeichnet, daß als Silane, Germane und Stannane solche der allgemeinen Formel
$R_{4-n}MeX_n$ (1)
verwendet werden, worin
Me = Si, Ge oder Sn;
R = Alkyl-, Cycloalkyl-, Aryl-, Aralkyl- oder Alkenylreste mit der Maßgabe, daß 1-Arylalkyl- und 2-Alkenylreste ausgeschlossen sind;
X = Reste der Formeln

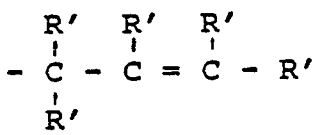
oder
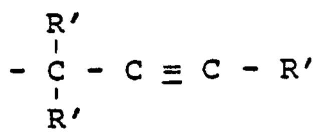

(a) (b)

R′ = H-Atome oder Reste R und
n = 1, 2, 3 oder 4.

3. Verfahren nach Anspruch 1, dadurch gekennzeichnet, daß als Siloxane, Germoxane und Stannoxane ketten- oder ringförmige Verbindungen verwendet werden, die mindestens eine Einheit der allgemeinen Formel

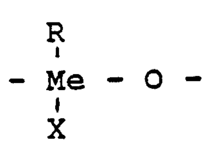 (2)

enthalten, worin Me, R und X die angegebene Bedeutung haben, und die restlichen Valenzen der Metallatome mit Resten R abgesättigt sind oder mit O-Atomen weiterer Einheiten (2) oder Einheiten der allgemeinen Formel

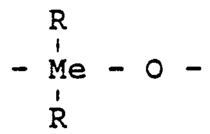

(2′)

verbunden sind.